(19) Europäisches Patentamt
European Patent Office
Office européen des brevets

(11) **EP 3 448 102 A1**

(12) **EUROPEAN PATENT APPLICATION**
published in accordance with Art. 153(4) EPC

(43) Date of publication:
**27.02.2019 Bulletin 2019/09**

(21) Application number: **17778855.1**

(22) Date of filing: **09.02.2017**

(51) Int Cl.:
***H04W 72/04*** (2009.01)

(86) International application number:
**PCT/JP2017/004677**

(87) International publication number:
**WO 2017/175476 (12.10.2017 Gazette 2017/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.04.2016 JP 2016077078**

(71) Applicant: **Sharp Kabushiki Kaisha
Sakai City, Osaka 590-8522 (JP)**

(72) Inventors:
• **SUZUKI, Shoichi
  Osaka 590-8522 (JP)**
• **AIBA, Tatsushi
  Osaka 590-8522 (JP)**

(74) Representative: **Müller-Boré & Partner
Patentanwälte PartG mbB
Friedenheimer Brücke 21
80639 München (DE)**

(54) **TERMINAL DEVICE, BASE STATION DEVICE, COMMUNICATION METHOD, AND INTEGRATED CRICUIT**

(57)    The present invention allows a terminal apparatus and a base station apparatus to efficiently communicate with each other by using an uplink signal. A terminal apparatus receives a PDCCH including a DCI format, and performs a transmission using a PUSCH based on detection of the PDCCH, and determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of SC-FDMA symbols that transmit the PUSCH in one subframe, uplink control information by using the PUSCH that includes no transport block.

FIG. 12

## Description

Technical Field

The present invention relates to a terminal apparatus, a base station apparatus, a communication method, and an integrated circuit.

Background Art

In the 3rd Generation Partnership Project (3GPP), a radio access method and a radio network for cellular mobile communications (hereinafter, referred to as "Long Term Evolution (LTE, trade name)", or "Evolved Universal Terrestrial Radio Access (EUTRA)") have been studied. In LTE, a base station apparatus is also referred to as an evolved NodeB (eNodeB), and a terminal apparatus is also referred to as a User Equipment (UE). LTE is a cellular communication system in which multiple areas are deployed in a cellular structure, with each of the multiple areas being covered by a base station apparatus. A single base station apparatus may manage multiple cells.

LTE supports a Time Division Duplex (TDD). LTE that employs the TDD scheme is also referred to as TD-LTE or LTE TDD. In TDD, uplink signals and downlink signals are time division multiplexed. Furthermore, LTE supports a Frequency Division Duplex (FDD).

In 3GPP, in order to enhance uplink capacity, transmission of a PUSCH in a UpPTS in a special subframe has been studied (NPL 1).

Citation List

Non Patent Literature

NPL 1: "Motivation for New Work Item Proposal: UL transmission Enhancement for LTE", R1-160226, CMCC, 3GPP TSG RAN Meeting #71, Gothenburg, Sweden, 7th-10th March 2016.
NPL 2: "3GPP TS 36.211 V12.5.0 (2015-03)", 26th March, 2015.
NPL 3: "3GPP TS 36.213 V12.5.0 (2015-03)", 26th March, 2015.

Summary of Invention

Technical Problem

The present invention provides a terminal apparatus capable of efficiently communicating with a base station apparatus by using an uplink signal, a base station apparatus communicating with the terminal apparatus, a communication method used for the terminal apparatus, a communication method used for the base station apparatus, an integrated circuit mounted on the terminal apparatus, and an integrated circuit mounted on the base station apparatus. Here, the uplink signal may include a PUSCH, an SRS, and/or a PRACH. Here, the uplink signal may include a UL-SCH and/or CSI.

Solution to Problem

(1) According to some aspects of the present invention, the following measures are provided. That is, a first aspect of the present invention is a terminal apparatus including a receiver configured to receive a Physical Downlink Control Channel (PDCCH) including a Downlink Control Information (DCI) format, and a transmitter configured to perform a transmission using a Physical Uplink Shared Channel (PUSCH) based on detection of the PDCCH, wherein the transmitter determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(2) A second aspect of the present invention is a base station apparatus including a transmitter configured to perform a transmission of a Physical Downlink Control Channel (PDCCH) including a Downlink Control Information (DCI) format, and a receiver configured to perform reception using a Physical Uplink Shared Channel (PUSCH) corresponding to the transmission of the PDCCH, wherein the receiver determines to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(3) A third aspect of the present invention is a communication method used for a terminal apparatus, the communication method including the steps of receiving a Physical Downlink Control Channel (PDCCH) including a Downlink Control Information (DCI) format, performing a transmission using a Physical Uplink Shared Channel (PUSCH) based on detection of the PDCCH, and determining to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(4) A fourth aspect of the present invention is a communication method used for a base station apparatus, the communication method including the steps of performing a transmission of a Physical Downlink Control Channel (PDCCH) including a Downlink Control Information (DCI) format, performing reception using a Physical Uplink Shared Channel (PUSCH) corresponding to the transmission of the PDCCH, and determining to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(5) A fifth aspect of the present invention is an integrated circuit mounted on a terminal apparatus, the integrated circuit including a reception circuit configured to receive a Physical Downlink Control Channel (PDCCH) including a Downlink Control Information (DCI) format, and a transmission circuit configured to perform a transmission using a Physical Uplink Shared Channel (PUSCH) based on detection of the PDCCH, wherein the transmission circuit determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(6) A sixth aspect of the present invention is an integrated circuit mounted on a base station apparatus, the integrated circuit including a transmission circuit configured to perform a transmission of a Physical Downlink Control Channel (PDCCH) including a Downlink Control Information (DCI) format, and a reception circuit configured to perform reception using a Physical Uplink Shared Channel (PUSCH) corresponding to the transmission of the PDCCH, wherein the reception circuit determines to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

Advantageous Effects of Invention

According to the present invention, a terminal apparatus and a base station apparatus can efficiently communicate with each other by using an uplink signal.

Brief Description of Drawings

FIG. 1 is a conceptual diagram of a radio communication system according to the present embodiment.
FIG. 2 is a diagram illustrating a schematic configuration of a radio frame of Frame structure Type 2 according to the present embodiment.

FIG. 3 is a diagram illustrating a schematic configuration of an uplink slot according to the present embodiment.

FIG. 4 is a diagram illustrating one example of an uplink cyclic prefix configuration according to the present embodiment.

FIG. 5 is a diagram illustrating UL/DL configurations according to the present embodiment.

FIG. 6 is a diagram illustrating one example of an uplink subframe according to the present embodiment.

FIG. 7 is a diagram illustrating one example of a special subframe according to the present embodiment.

FIG. 8 is a diagram illustrating one example of a special subframe configuration for a normal CP in the downlink, according to the present embodiment.

FIG. 9 is a diagram illustrating an example of the relationship between a subframe in which a PDCCH is detected and a subframe in which a corresponding PUSCH transmission is adjusted, according to the present embodiment.

FIG. 10 is a diagram illustrating an example of the relationship between a subframe in which a PDCCH is detected and a subframe in which a corresponding PUSCH transmission is adjusted, according to the present embodiment.

FIG. 11 is a flow chart illustrating one example of a method for determining information transmitted through a PUSCH, according to the present embodiment.

FIG. 12 is a schematic block diagram illustrating a configuration of a terminal apparatus 1 according to the present embodiment.

FIG. 13 is a schematic block diagram illustrating a configuration of a base station apparatus 3 according to the present embodiment.

Description of Embodiments

Embodiments of the present invention will be described below.

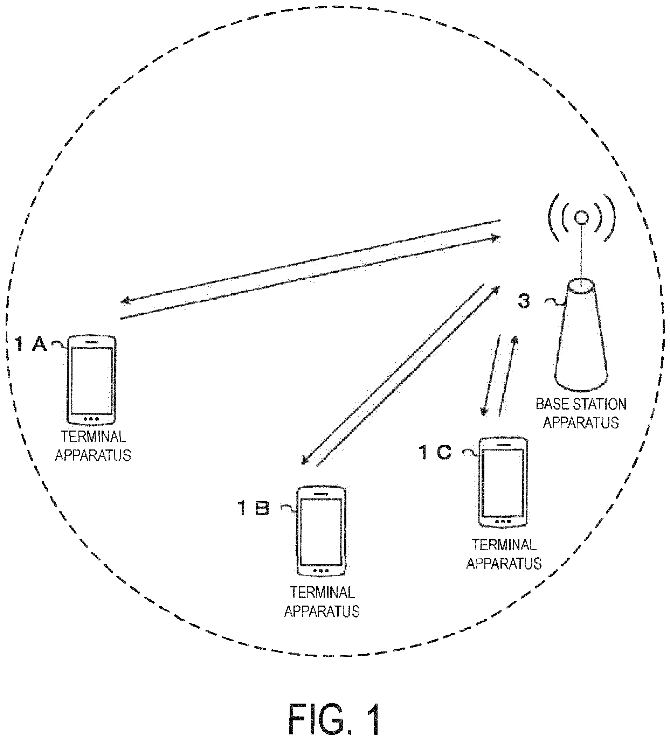

FIG. 1 is a conceptual diagram of a radio communication system according to the present embodiment. In FIG. 1, the radio communication system includes terminal apparatuses 1A to 1C and a base station apparatus 3. Each of the terminal apparatuses 1A to 1C is referred to as a terminal apparatus 1 below.

Now, carrier aggregation will be described.

Multiple serving cells may be configured for the terminal apparatus 1. A technology in which the terminal apparatus 1 communicates via the multiple serving cells is referred to as cell aggregation or carrier aggregation. The present invention may be applied to each of the multiple serving cells configured for the terminal apparatus 1. Furthermore, the present invention may be applied to some of the configured multiple serving cells. Furthermore, the present invention may be applied to each of groups of the configured multiple serving cells. Furthermore, the present invention may be applied to some of the groups of the configured multiple serving cells. In carrier aggregation, the configured multiple serving cells are also referred to as aggregated serving cells.

Time Division Duplex (TDD) and/or Frequency Division Duplex (FDD) is applied to a radio communication system in the present embodiment. For cell aggregation, TDD may be applied to all multiple serving cells. Alternatively, serving cells to which TDD is applied and serving cells to which FDD is applied may be aggregated. In the present embodiment, serving cells to which TDD is applied is also referred to as TDD serving cells, or serving cells using Frame structure Type 2.

The configured multiple serving cells include one primary cell and one or multiple secondary cells. The primary cell is a serving cell in which an initial connection establishment procedure has been performed, a serving cell in which a connection reestablishment procedure has been started, or a cell indicated as a primary cell during a handover procedure. At the point of time when a Radio Resource Control (RRC) connection is established, or later, a secondary cell may be configured.

A carrier corresponding to a serving cell in the downlink is referred to as a downlink component carrier. A carrier corresponding to a serving cell in the uplink is referred to as an uplink component carrier. The downlink component carrier and the uplink component carrier are collectively referred to as a component carrier. In TDD, a carrier corresponding to a serving cell in the uplink is the same as a carrier corresponding to a serving cell in the downlink.

The terminal apparatus 1 can perform simultaneous transmission on multiple physical channels/of multiple physical signals in the multiple TDD serving cells (component careers) to be aggregated in the same band. The terminal apparatus 1 can perform simultaneous reception on multiple physical channels/of multiple physical signals in the multiple TDD serving cells (component careers) to be aggregated in the same band.

Physical channels and physical signals in the present embodiment will be described.

In FIG. 1, the following uplink physical channels are used for uplink radio communication from the terminal apparatus 1 to the base station apparatus 3. The uplink physical channels are used for transmission of information output from higher layers.

-   Physical Uplink Control Channel (PUCCH)
-   Physical Uplink Shared Channel (PUSCH)

- Physical Random Access Channel (PRACH)

The PUCCH is used for transmission of Uplink Control Information (UCI). The uplink control information is also referred to as control data or a control information feedback. The uplink control information includes: downlink Channel State Information (CSI); a Scheduling Request (SR) used to request for a PUSCH (Uplink-Shared Channel: UL-SCH) resource for initial transmission; and a Hybrid Automatic Repeat request ACKnowledgement (HARQ-ACK) for downlink data (a Transport block, a Medium Access Control Protocol Data Unit (MAC PDU), a Downlink-Shared Channel (DL-SCH), or a Physical Downlink Shared Channel (PDSCH)).

Channel state information may include at least a Channel Quality Indicator (CQI), a Precoding Matrix Indicator (PMI), and a Rank Indication (RI). The channel state information may be associated with a PDSCH transmission. The CQI is associated with a modulation scheme, a coding rate, and/or a spectral efficiency for a PDSCH transmission satisfying a prescribed condition. The PMI indicates a preferable codebook index (precoding matrix) for the PDSCH transmission. The RI corresponds to the number of available transmission layers for the PDSCH transmission.

The PUSCH is used for transmission of uplink data (UpLink-Shared CHannel (UL-SCH)). Furthermore, the PUSCH may be used to transmit the HARQ-ACK and/or channel state information along with the uplink data. The PUSCH may be used to transmit only the channel state information. The PUSCH may be used to transmit only the HARQ-ACK and the channel state information.

The PRACH is used to transmit a random access preamble.

In FIG. 1, the following uplink physical signal is used in the uplink radio communication. The uplink physical signal is not used for transmission of information output from the higher layer, but is used by the physical layer.

- Uplink Reference Signal (UL RS)

In the present embodiment, the following two types of uplink reference signals are used.

- Demodulation Reference Signal (DMRS)
- Sounding Reference Signal/Sounding Reference Symbol (SRS)

The DMRS is associated with transmission of the PUSCH or the PUCCH. The DMRS is time-multiplexed with the PUSCH or the PUCCH. The base station apparatus 3 uses the DMRS in order to perform channel compensation of the PUSCH or the PUCCH. Transmission of both of the PUSCH and the DMRS is hereinafter referred to simply as transmission of the PUSCH. Transmission of both of the PUCCH and the DMRS is hereinafter referred to simply as transmission of the PUCCH.

The SRS is not associated with the transmission of the PUSCH or the PUCCH. The base station apparatus 3 may use the SRS to measure a channel state. The SRS is transmitted in the last Single Carrier-Frequency Division Multiple Access (SC-FDMA) symbol in an uplink subframe, or in an SC-FDMA symbol in a UpPTS.

In FIG. 1, the following downlink physical channels are used for downlink radio communication from the base station apparatus 3 to the terminal apparatus 1. The downlink physical channels are used for transmission of information output from higher layers.

- Physical Broadcast Channel (PBCH)
- Physical Control Format Indicator Channel (PCFICH)
- Physical Hybrid automatic repeat request Indicator Channel (PHICH)
- Physical Downlink Control Channel (PDCCH)
- Enhanced Physical Downlink Control Channel (EPDCCH)
- Physical Downlink Shared Channel (PDSCH)
- Physical Multicast Channel (PMCH)

The PBCH is used for broadcasting a Master Information Block (MIB, Broadcast Channel (BCH)) that is shared by the terminal apparatuses 1.

The PCFICH is used for transmission of information indicating a region (OFDM symbols) to be used for transmission of the PDCCH.

The PHICH is used for transmission of a HARQ indicator (HARQ feedback or response information) indicating an ACKnowledgement (ACK) or a Negative ACKnowledgement (NACK) for the uplink data (UpLink Shared CHannel (UL-SCH)) received by the base station apparatus 3.

The PDCCH and the EPDCCH are used for transmission of Downlink Control Information (DCI). The Downlink Control Information is also referred to as a DCI format. The Downlink Control Information includes a downlink grant and an uplink grant. The downlink grant is also referred to as downlink assignment or downlink allocation.

The downlink grant is used for scheduling of a single PDSCH within a single cell. The downlink grant is used for scheduling of the PDSCH within a subframe same as the sub frame in which the downlink grant is transmitted.

The uplink grant is used for scheduling of a single PUSCH within a single cell. Here, the single PUSCH corresponds to one transmission antenna port. The uplink grant is used for scheduling of a single PUSCH within the fourth or later subframe after the subframe in which the uplink grant is transmitted. The uplink grant transmitted through the PDCCH is also referred to as a DCI format 0.

The CRC parity bits attached to the downlink grant or the uplink grant are scrambled with a Cell-Radio Network Temporary Identifier (C-RNTI), a Temporary C-RNTI, or a Semi Persistent Scheduling Cell-Radio Network Temporary Identifier (SPS C-RNTI). The C-RNTI and the SPS C-RNTI are identifiers for identifying a terminal apparatus within a cell. The Temporary C-RNTI serves as an identifier used to identify the terminal apparatus 1 that has transmitted a random access preamble in a contention-based random access procedure.

The C-RNTI and the Temporary C-RNTI are used to control the PDSCH or the PUSCH in a single subframe. The SPS C-RNTI is used to periodically allocate a resource for the PDSCH or the PUSCH.

The PDSCH is used for transmission of downlink data (Downlink Shared Channel (DL-SCH)).

The PMCH is used for transmission of multicast data (Multicast Channel (MCH)).

In FIG. 1, the following downlink physical signals are used in the downlink radio communication. The downlink physical signals are not used for transmission of information output from the higher layer, but are used by the physical layer.

- Synchronization signal (SS)
- Downlink Reference Signal (DL RS)

The Synchronization signal is used in order for the terminal apparatus 1 to take synchronization in the frequency domain and the time domain in the downlink. In the TDD scheme, the synchronization signal is mapped to subframes 0, 1, 5, and 6 within a radio frame. In the FDD scheme, the synchronization signal is mapped to subframes 0 and 5 within a radio frame.

The Downlink Reference Signal is used in order for the terminal apparatus 1 to perform channel compensation on a downlink physical channel. The Downlink Reference Signal is used in order for the terminal apparatus 1 to calculate downlink channel state information.

The downlink physical channels and the downlink physical signals are collectively referred to as a downlink signal. The uplink physical channels and the uplink physical signals are collectively referred to as an uplink signal. The downlink physical channels and the uplink physical channels are collectively referred to as a physical channel. The downlink physical signals and the uplink physical signals are collectively referred to as a physical signal.

The BCH, the MCH, the UL-SCH, and the DL-SCH are transport channels. A channel used in a Medium Access Control (MAC) layer is referred to as a transport channel. A unit of the transport channel used in the MAC layer is also referred to as a transport block (TB) or a MAC Protocol Data Unit (PDU). A Hybrid Automatic Repeat reQuest (HARQ) is controlled for each transport block in the MAC layer. The transport block is a unit of data that the MAC layer delivers to the physical layer. In the physical layer, the transport block is mapped to a codeword and coding processing is performed for each codeword.

The base station apparatus 3 and the terminal apparatus 1 exchange (transmit and/or receive) a signal in the higher layer. For example, the base station apparatus 3 and the terminal apparatus 1 may transmit and/or receive, in a Radio Resource Control (RRC) layer, RRC signaling (also referred to as a Radio Resource Control message (RRC message) or Radio Resource Control information (RRC information)). Furthermore, the base station apparatus 3 and the terminal apparatus 1 may transmit and/or receive, in the Medium Access Control (MAC) layer, a MAC Control Element (CE). Here, the RRC signaling and/or the MAC CE is also referred to as higher layer signaling. The PUSCH and the PDSCH are used for transmission of the RRC signaling and the MAC CE.

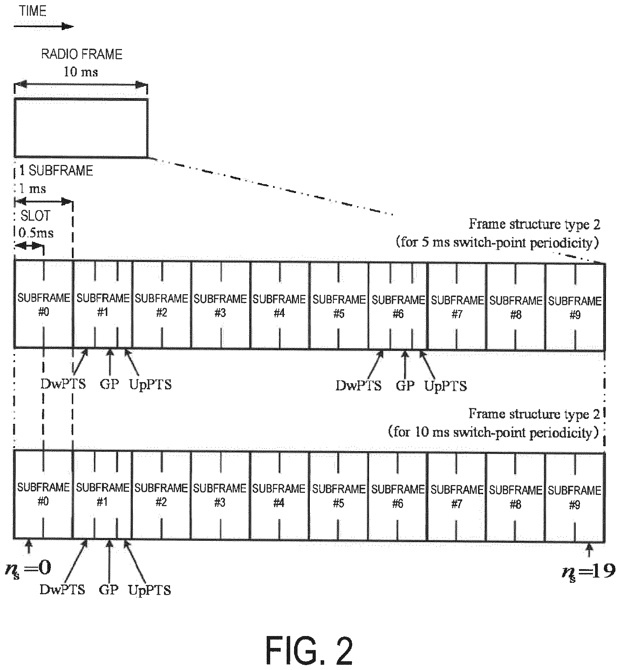

FIG. 2 is a diagram illustrating a schematic configuration of a radio frame of Frame structure Type 2 according to the present embodiment. Frame structure Type 2 is applicable to TDD. In FIG. 2, the horizontal axis is a time axis.

Various field sizes in the time domain are expressed by the number of time units $T_s = 1/(15000 \times 2048)$ seconds. The length of the radio frame of Frame structure Type 2 is $T_f = 307200 \times T_s = 10$ ms. The radio frame of Frame structure Type 2 includes two contiguous half-frames in the time domain. The length of each half-frame is $T_{half-frame} = 153600 \times T_s = 5$ms. Each of the half-frames includes five contiguous subframes in the time domain. The length of each subframe is $T_{subframe} = 30720 \times T_s = 1$ ms. Each of the subframes i includes two contiguous slots in the time domain. The two contiguous slots in the time domain are a slot having a slot number $n_s$ of 2i in the radio frame and a slot having a slot number $n_s$ of 2i + 1 in the radio frame. The length of each slot is $T_{slot} = 153600 \times n_s = 0.5$ ms. Each of the radio frames includes ten contiguous subframes in the time domain. Each of the radio frames includes 20 contiguous slots ($n_s = 0, 1,..., 19$) in the time domain.

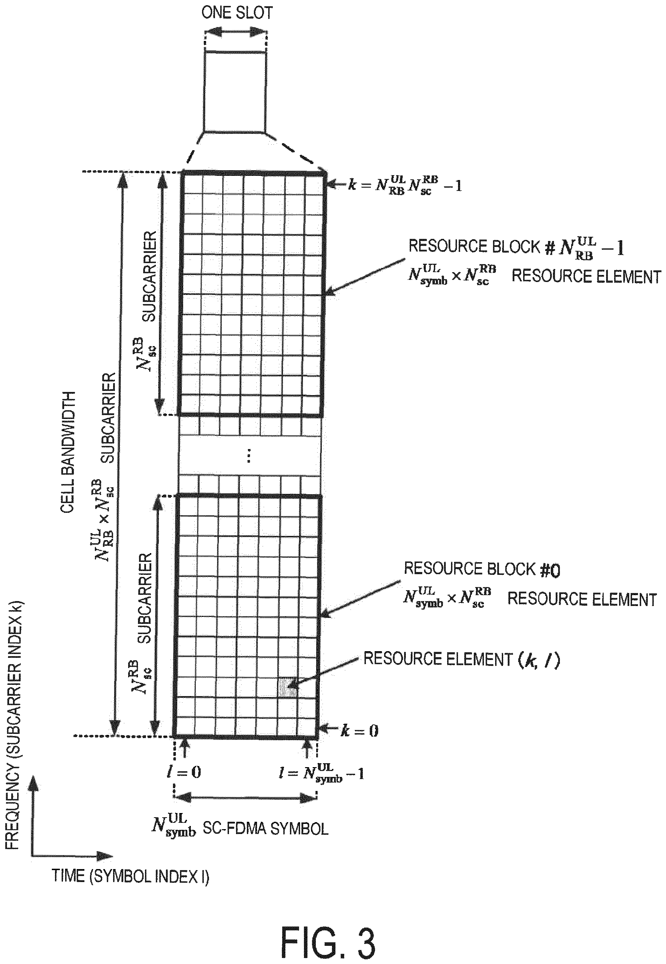

A configuration of a slot according to the present embodiment will be described below. FIG. 3 is a diagram illustrating a schematic configuration of an uplink slot according to the present embodiment. FIG. 3 illustrates a configuration of an uplink slot in one cell. In FIG. 3, the horizontal axis is a time axis, and the vertical axis is a frequency axis. In FIG. 3, 1 is an SC-FDMA symbol number/index, and k is a subcarrier number/index.

The physical signal or the physical channel transmitted in each of the slots is expressed by a resource grid. In uplink, the resource grid is defined by multiple subcarriers and multiple SC-FDMA symbols. Each element within the resource grid is referred to as a resource element. The resource element is expressed by a subcarrier number/index k and an SC-FDMA symbol number/index 1.

The resource grid is defined for each antenna port. In the present embodiment, description is given for one antenna port. The present embodiment may be applied to each of multiple antenna ports.

The uplink slot includes multiple SC-FDMA symbols 1 (1 = 0, 1,..., and $N^{UL}_{symb}$) in the time domain. $N^{UL}_{symb}$ indicates the number of SC-FDMA symbols included in one uplink slot. For a normal Cyclic Prefix (CP) in the uplink, $N^{UL}_{symb}$ is 7. For an extended CP in the uplink, $N^{UL}_{symb}$ is 6.

The terminal apparatus 1 receives a parameter UL-CyclicPrefixLength for indicating a CP length in the uplink from the base station apparatus 3. The base station apparatus 3 may broadcast, in a cell, system information including the parameter UL-CyclicPrefixLength corresponding to the cell.

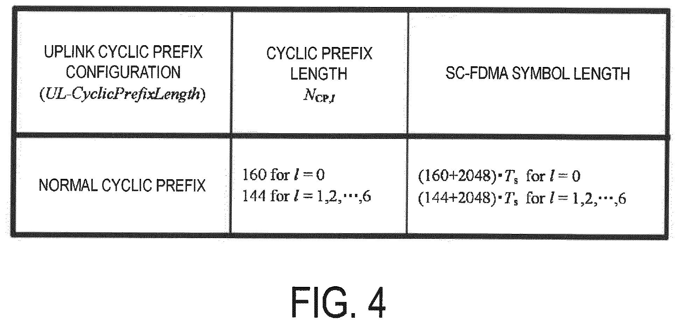

FIG. 4 is a diagram illustrating one example of an uplink cyclic prefix configuration according to the present embodiment. $N_{CP,1}$ indicates an uplink CP length for an SC-FDMA symbol 1 in a slot. In a case that an uplink cyclic prefix configuration (UL-CyclicPrefixLength) is a normal CP, $N_{CP,0}$ = 160 for 1 = 0. The length of the SC-FDMA symbol 1 excluding the CP length is 2048 $\times$ $T_s$, and the length of the SC-FDMA symbol 1 including the CP length is ($N_{CP,1}$ + 2048) $\times$ $T_s$.

The uplink slot includes multiple subcarriers k (k = 0, 1,..., $N^{UL}_{RB}$ $\times$ $N^{RB}_{sc}$) in the frequency domain. $N^{UL}_{RB}$ is an uplink bandwidth configuration for a serving cell, which is expressed by a multiple of $N^{RB}_{sc}$. $N^{RB}_{sc}$ is a (physical) resource block size in the frequency domain, which is expressed by the number of subcarriers. In the present embodiment, a subcarrier interval $\Delta f$ is 15 kHz, and $N^{RB}_{sc}$ is 12. That is, in the present embodiment, $N^{RB}_{sc}$ is 180 kHz.

A resource block is used to express mapping of a physical channel to resource elements. For the resource block, a virtual resource block and a physical resource block are defined. The physical channel is first mapped to the virtual resource block. Thereafter, the virtual resource block is mapped to the physical resource block. One physical resource block is defined by $N^{UL}_{symb}$ contiguous SC-FDMA symbols in the time domain and by $N^{RB}_{sc}$ contiguous subcarriers in the frequency domain. Hence, one physical resource block is constituted by ($N^{UL}_{symb}$ $\times$ $N^{RB}_{sc}$) resource elements. One physical resource block corresponds to one slot in the time domain. The physical resource blocks are numbered (0, 1,..., $N^{UL}_{RB}$ - 1) in an order starting from a lower frequency in the frequency domain.

The downlink slot according to the present embodiment includes multiple OFDM symbols. The downlink slot configuration according to the present embodiment is the same except that a resource grid is defined by multiple subcarriers and multiple OFDM symbols, so the description of the downlink slot configuration will be omitted.

In a TDD serving cell, an uplink bandwidth configuration value for the TDD serving cell is the same as a downlink bandwidth configuration value for the TDD serving cell.

A resource block is used to express mapping of a certain physical channel (such as the PDSCH or the PUSCH) to resource elements. For the resource block, a virtual resource block and a physical resource block are defined. A certain physical channel is first mapped to a virtual resource block. Thereafter, the virtual resource block is mapped to the physical resource block. One physical resource block is defined by seven consecutive OFDM symbols or SC-FDMA symbols in the time domain and by 12 consecutive subcarriers in the frequency domain. Hence, one physical resource block includes (7 $\times$ 12) resource elements. Furthermore, one physical resource block corresponds to one slot in the time domain and corresponds to 180 kHz in the frequency domain. Physical resource blocks are numbered from 0 in the frequency domain.

A time-continuous signal $s_1$ (t) in the SC-FDMA symbol 1 in the uplink slot is given by Expression 1. Expression 1 is applied to an uplink physical signal, and an uplink physical channel except for the PRACH.

[Expression 1]

$$s_l(t) = \sum_{k=-\lfloor N^{UL}_{RB} N^{RB}_{sc}/2\rfloor}^{\lceil N^{UL}_{RB} N^{RB}_{sc}/2\rceil-1} a_{k^{(-)},l} \cdot e^{j2\pi(k+1/2)\Delta f(t-N_{CP,l}T_s)}$$

$$\text{for } 0 \le t < \left(N_{CP,l} + 2048\right) \times T_s$$

$$\text{where } k^{(-)} = k + \lfloor N^{UL}_{RB} N^{RB}_{sc}/2\rfloor \text{ and } \Delta f = 15\text{kHz}$$

, where $a_{k,1}$ is content of a resource element (k, 1). SC-FDMA symbols in a slot are transmitted in ascending order of 1 starting from 1 = 0. The SC-FDMA symbol 1 > 0 starts at a time, in the slot, defined by Expression 2.

[Expression 2]

$$\sum_{l'=0}^{l-1}(N_{\text{CP},l'} + N)T_s$$

An UpLink/DownLink configuration (UL/DL configuration) according to the present embodiment will be described below.

Following three types of sub frames are defined for Frame structure Type 2.

• Downlink subframe
• Uplink subframe
• Special subframe

The downlink subframe is a subframe reserved for the downlink transmission. The uplink subframe is a subframe reserved for the uplink transmission. The special subframe is constituted of three fields. The three fields are a Downlink Pilot Time Slot (DwPTS), a Guard Period (GP), and an Uplink Pilot Time Slot (UpPTS). The sum of lengths of the DwPTS, the GP, and the UpPTS is 1 ms. The DwPTS is a field reserved for the downlink transmission. The UpPTS is a field reserved for the uplink transmission. The GP is a field in which neither the downlink transmission nor the uplink transmission is performed. Moreover, the special subframe may be constituted of only the DwPTS and the GP, or may be constituted of only the GP and the UpPTS.

A radio frame of Frame structure Type 2 is constituted of at least the downlink subframe, the uplink subframe, and the special subframe. The configuration of the radio frame of Frame structure Type 2 is indicated by the UL/DL configuration. The terminal apparatus 1 receives information for indicating the UL/DL configuration from the base station apparatus 3. The base station apparatus 3 may broadcast, in a cell, system information including information for indicating the UL/DL configuration corresponding to the cell.

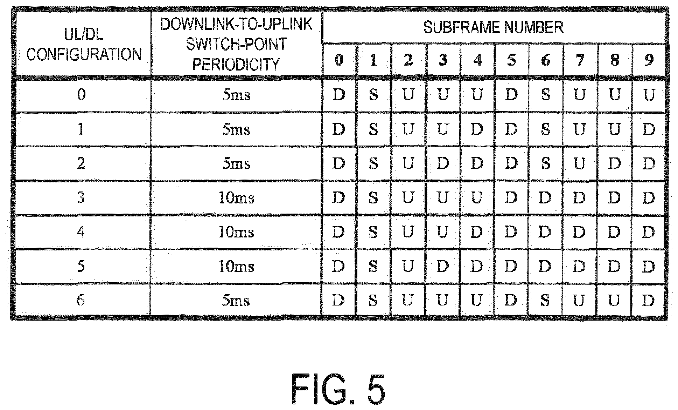

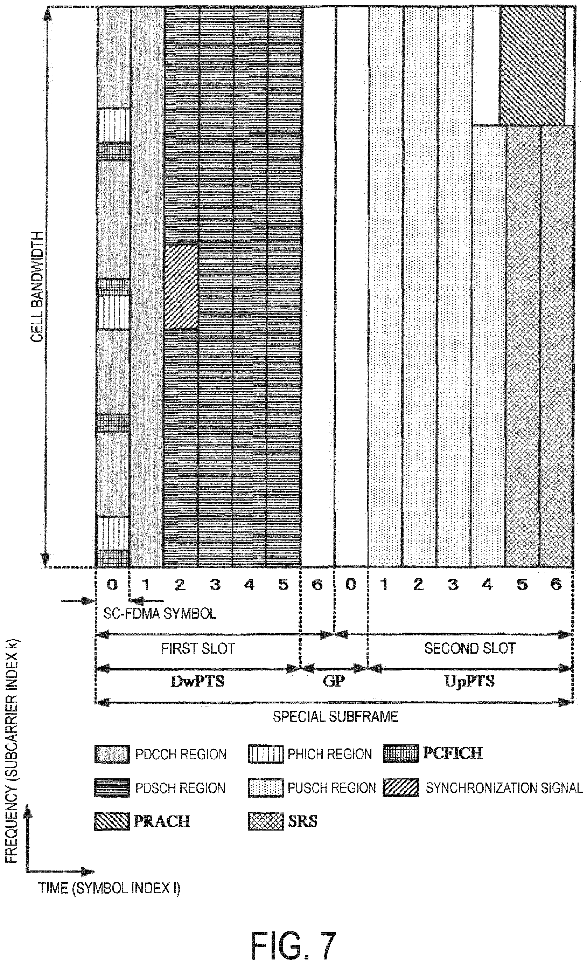

FIG. 5 is a diagram illustrating UL/DL configurations according to the present embodiment. FIG. 5 indicates UL/DL configurations in one radio frame. In FIG. 7, D denotes a downlink subframe, U denotes an uplink subframe, and S denotes a special subframe. A subframe number is used to identify a subframe in the radio frame.

According to FDD, all subframes are downlink subframes. According to FDD, all subframes are uplink subframes.

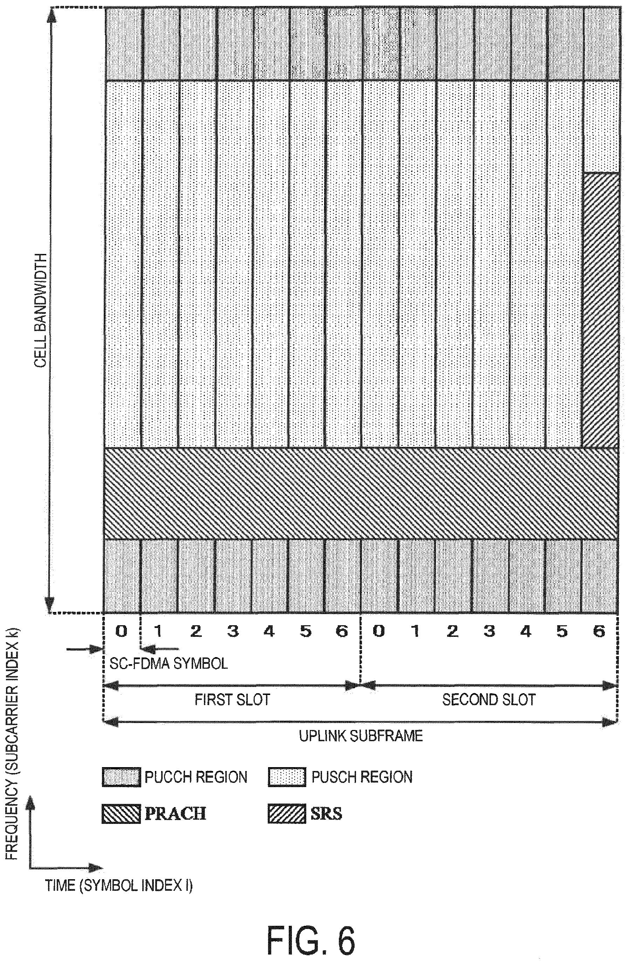

FIG. 6 is a diagram illustrating one example of an uplink subframe according to the present embodiment. FIG. 7 is a diagram illustrating one example of a special subframe according to the present embodiment. In FIGS. 6 and 7, the horizontal axis is a time axis, and the vertical axis is a frequency axis. In FIGS. 6 and 7, a downlink cyclic prefix and an uplink cyclic prefix are configured to a normal cyclic prefix.

The DwPTS includes a first symbol in a special subframe. The UpPTS includes the last symbol in the special subframe. The GP exists between the DwPTS and the UpPTS. The terminal apparatus 1 may perform switching from downlink reception processing to uplink transmission processing during the GP. In the UpPTS, the PUSCH, the SRS, and the PRACH are transmitted.

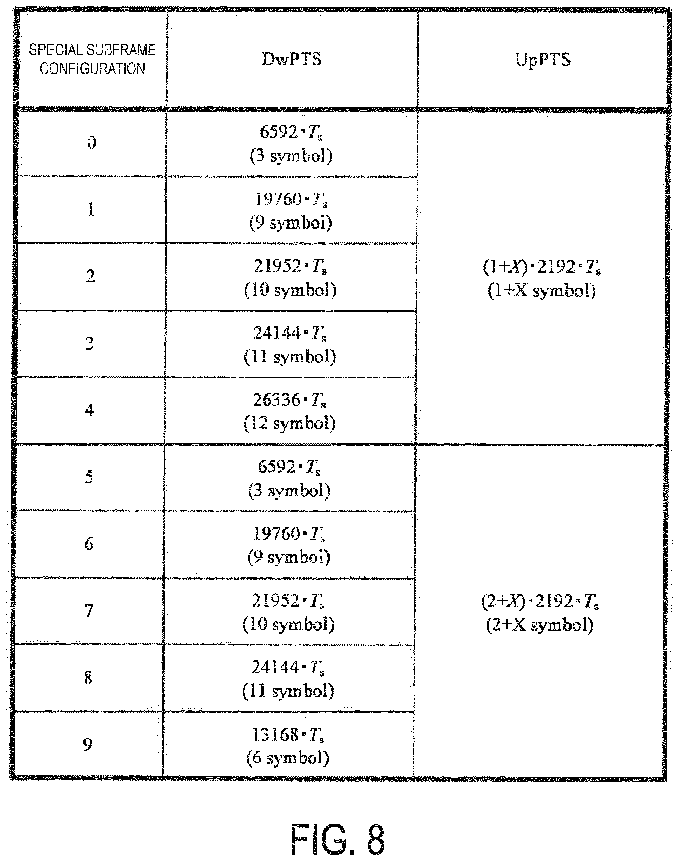

FIG. 8 is a diagram illustrating one example of a special subframe configuration for a normal CP in the downlink, according to the present embodiment. In a case that a special subframe configuration for a normal CP in the downlink is 0, the length of the DwPTS is 6592 × $T_s$, and the DwPTS includes three OFDM symbols including the normal CP. In a case that a special subframe configuration for a normal CP in the downlink is 0, and an uplink Cyclic Prefix (CP) configuration is the normal CP, the length of the UpPTS is (1 + X) × 2192 × $T_s$, and the UpPTS includes (1 + X) SC-FDMA symbols including the normal CP.

X is the number of added SC-FDMA symbols in the UpPTS. The value of X may be given based on an RRC layer parameter UpPtsAdd received from the base station apparatus 3. The default value of X may be 0. That is, in a case that the value of X is not configured by the RRC layer parameter, the value of X may be 0. The added SC-FDMA symbols are also referred to as extended SC-FDMA symbols. 1 in (1 + X) is the number of non-added SC-FDMA symbols in the UpPTS based on the RRC layer parameter UpPtsAdd.

For example, in a case that the value of a parameter pusch-UpPtsAdd is 6, the value of (Y + X) is 6. Y is 1 or 2. Here, in a case that the special subframe configuration is 0, the value of Y is 1 and the value of X is 5. Here, in a case that the special subframe configuration is 5 or 9, the value of Y is 2 and the value of X is 4.

The parameter UpPtsAdd may include a parameter indicating a special subframe to which the parameter UpPtsAdd corresponds. For a certain serving cell, the parameter UpPtsAdd may be applied to all special subframes. For a certain serving cell, the parameter UpPtsAdd may be applied to some special subframes. For example, the parameter UpPtsAdd may be applied to a special subframe having a subframe number 1, and the parameter UpPtsAdd may not be applied to a special subframe having a subframe number 6. That is, the special subframe having the subframe number 1 may include an added UpPTS, and the special subframe having the subframe number 6 may include a non-added UpPTS.

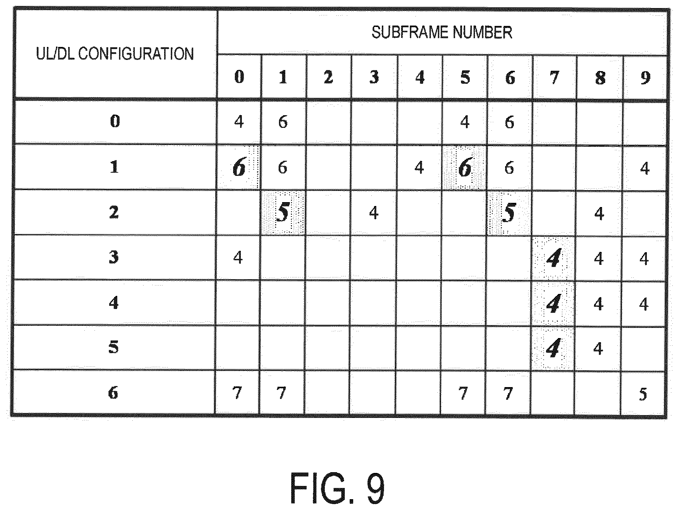

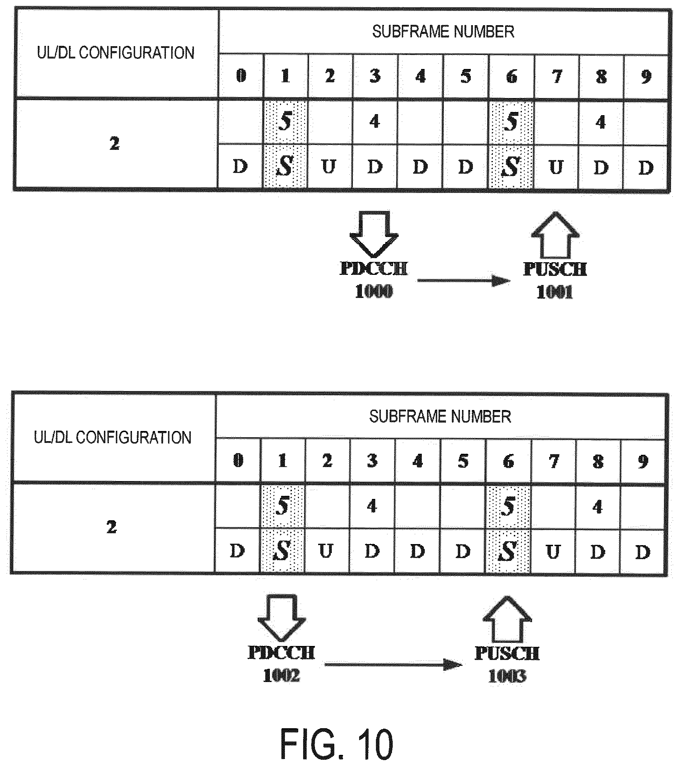

FIGS. 9 and 10 are diagrams illustrating an example of the relationship between a subframe in which a PDCCH is detected and a subframe in which a corresponding PUSCH transmission is adjusted, according to the present embodiment. Here, the PDCCH includes an uplink grant. Based on the detection of the PDCCH including the uplink grant in a subframe n, the terminal apparatus 1 makes an adjustment to allow the PUSCH transmission corresponding to the PDCCH to be performed in a subframe n + k. The value of k may be given in accordance with at least the table in FIG. 9, a UL/DL configuration, and the subframe number of a subframe in which the corresponding PDCCH is detected.

In FIG. 10, the UL/DL configuration is 2. In FIG. 10, the terminal apparatus 1 makes an adjustment, based on the detection of a PDCCH (1000) including an uplink grant in a downlink subframe having a subframe number 3, to allow a PUSCH transmission (1001) corresponding to the PDCCH including the uplink grant to be performed in an uplink subframe having a subframe number 7.

In FIG. 10, the terminal apparatus 1 makes an adjustment, based on the detection of a PDCCH (1002) including downlink control information in a special subframe having a subframe number 1, to allow a PUSCH transmission (1003) corresponding to the PDCCH including the downlink control information to be performed in a special subframe having a subframe number 6.

That is, whether a subframe in which the PUSCH is transmitted is an uplink subframe or a special subframe may be given based on at least the table in FIG. 9, a UL/DL configuration, and the subframe number of a subframe in which the corresponding PDCCH is detected.

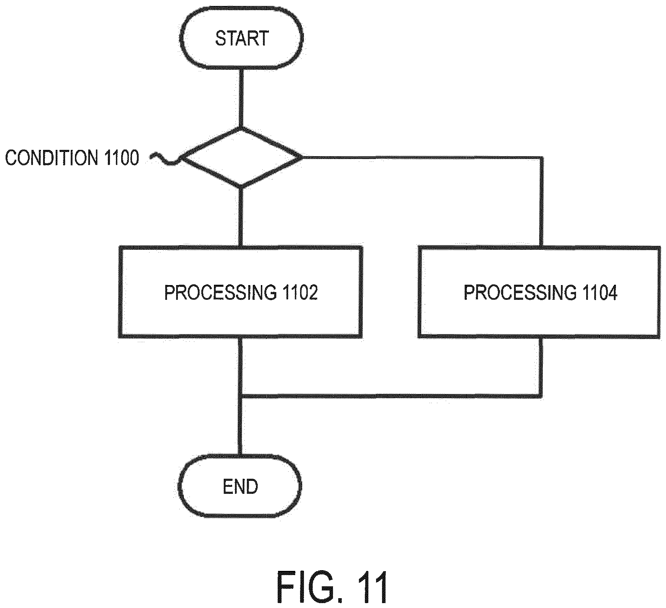

FIG. 11 is a flow chart illustrating one example of a method for determining information transmitted through a PUSCH, according to the present embodiment.

The terminal apparatus 1 may determine, based on a condition 1100, whether to perform processing A or processing B described below. The base station apparatus 3 may determine, based on a condition 1100, whether to perform processing corresponding to the processing A or the processing B. The processing A and the processing B are transmission processing. Processing corresponding to the processing A and processing corresponding to the processing B are reception processing.

The condition 1100 may include at least some or all of conditions A to G below.

(Condition A) The total number of resource blocks allocated based on a "resource allocation" field ($N_{PRB}$)
(Condition B) The value of a "modulation and coding scheme and redundancy version" field ($I_{MCS}$) (MCS index)
(Condition C) The value of a "CSI request" field and/or the number of bits
(Condition D) A UL/DL configuration
(Condition E) Whether a subframe in which the PUSCH is transmitted is an uplink subframe or a special subframe
(Condition F) The subframe number of a subframe in which a PDCCH including an uplink grant is detected
(Condition G) The number of SC-FDMA symbols that transmit the PUSCH in one subframe ($N_{symb}$)

(Processing A) The terminal apparatus 1 does not transmit a transport block (UL-SCH, uplink data) by using the PUSCH, and transmits only uplink control information by using the PUSCH. That is, the terminal apparatus 1 transmits the uplink control information by using the PUSCH (UL-SCH, uplink data) including no transport block. Here, the uplink control information includes at least CSI.

(Processing B) The terminal apparatus 1 determines the size of the transport block, and transmits at least the transport block by using the PUSCH.

Here, the "resource allocation" field, the "modulation and coding scheme and redundancy version" field, and the "CSI request" field are included in the uplink grant. The "resource allocation" field is also referred to as a "Resource block assignment and hopping resource allocation" field.

$N_{PRB}$ is the total number of resource blocks allocated for a PUSCH transmission. That is, the total number of resource blocks represents a bandwidth scheduled for the PUSCH transmission.

The MCS index corresponds to a modulation degree ($Q'_m$) for the PUSCH, a TBS index ($I_{TBS}$) for the PUSCH, and a redundancy version (rvidx) for the PUSCH. The TBS index ($I_{TBS}$) is used to determine the size of the transport block. The redundancy version (rvidx) is used to code the transport block.

The "CSI request" field is used to trigger a non-periodic CSI report. The "CSI request" field may be one bit or three bits.

In a case that the corresponding uplink grant is mapped to a UE-specific Search Space (USS) given by a C-RNTI, the three-bit "CSI request" field may be applied to the terminal apparatus 1 for which more than five serving cells are configured.

In a case that the corresponding uplink grant is mapped to a Common Search Space (CSS), the one-bit "CSI request" field may be applied to the terminal apparatus 1. In a case that the corresponding uplink grant is mapped to a UE-specific Search Space (USS) given by a C-RNTI, the one-bit "CSI request" field may be applied to the terminal apparatus 1 for which one serving cell is configured.

In a case that the "CSI request" field is one bit and the "CSI request" field is set to '1', a non-periodic CSI report for one serving cell is triggered. That is, in the case that the "CSI request" field is one bit and the "CSI request" field is set to '1', CSI for one serving cell is transmitted by using the corresponding PUSCH.

In a case that the "CSI request" field is three bits and the "CSI request" field is set to a value other than '000', a non-periodic CSI report for one or multiple serving cells is triggered. That is, in the case that the "CSI request" field is three bits and the "CSI request" field is set to a value other than '000', CSI for one or multiple serving cells is transmitted by using the corresponding PUSCH. CSI for one serving cell is also referred to as CSI for one CSI process.

The number of SC-FDMA symbols that transmit the PUSCH in one subframe ($N_{symb}$) may be given based on at least whether a subframe in which the PUSCH is transmitted is an uplink subframe or a special subframe.

Based on the condition 1100, processing A may be performed in a case that a condition including at least $N_{PRB} \le X$ is satisfied, and processing B may be performed in the other cases. The value of X may be based on at least some or all of the conditions A to G described above.

A first modification of the condition 1100 will be described below.

For example, in a case that $I_{MCS} = 29$, the "CSI request" field is one bit, the "CSI request" field is set to trigger a non-periodic CSI report, and the PUSCH is transmitted in an uplink subframe, the value of X may be $Y_1$. That is, in a case that $I_{MCS} = 29$, the "CSI request" field is one bit, the "CSI request" field is set to trigger a non-periodic CSI report, $N_{PRB} \le Y_1$, and the PUSCH is transmitted in an uplink subframe, the terminal apparatus 1 may perform the processing A. $Y_1$ may be 4.

For example, in a case that $I_{MCS} = 29$, the "CSI request" field is one bit, the "CSI request" field is set to trigger a non-periodic CSI report, and the PUSCH is transmitted in a special subframe, the value of X may be $Y_2$. That is, in a case that $I_{MCS} = 29$, the "CSI request" field is one bit, the "CSI request" field is set to trigger a non-periodic CSI report, $N_{PRB} \le Y_2$, and the PUSCH is transmitted in a special subframe, the terminal apparatus 1 may perform the processing A. $Y_2$ may be an integer larger than 4, or 8.

For example, in a case that $I_{MCS} = 29$, the "CSI request" field is three bits, the "CSI request" field triggers a non-periodic CSI report for one CSI process, and the PUSCH is transmitted in an uplink subframe, the value of X may be $Y_3$. That is, in a case that $I_{MCS} = 29$, the "CSI request" field is three bits, the "CSI request" field is set to trigger a non-periodic CSI report for one CSI process, $N_{PRB} \le Y_3$, and the PUSCH is transmitted in an uplink subframe, the terminal apparatus 1 may perform the processing A. $Y_3$ may be 4.

For example, in a case that $I_{MCS} = 29$, the "CSI request" field is three bits, the "CSI request" field triggers a non-periodic CSI report for one CSI process, and the PUSCH is transmitted in a special subframe, the value of X may be $Y_4$. That is, in a case that $I_{MCS} = 29$, the "CSI request" field is three bits, the "CSI request" field is set to trigger a non-periodic CSI report for one CSI process, $N_{PRB} \le Y_4$, and the PUSCH is transmitted in a special subframe, the terminal apparatus 1 may perform the processing A. $Y_4$ may be an integer larger than 4, or 8.

For example, in a case that $I_{MCS} = 29$, the "CSI request" field is three bits, the "CSI request" field triggers a non-periodic CSI report for more than one and less than six CSI processes, and the PUSCH is transmitted in an uplink subframe, the value of X may be $Y_5$. That is, in a case that $I_{MCS} = 29$, the "CSI request" field is three bits, the "CSI request" field is set to trigger a non-periodic CSI report for more than one and less than six CSI processes, $N_{PRB} \le Y_5$, and the PUSCH is transmitted in an uplink subframe, the terminal apparatus 1 may perform the processing A. $Y_5$ may be 20.

For example, in a case that $I_{MCS} = 29$, the "CSI request" field is three bits, the "CSI request" field triggers a non-periodic CSI report for more than one and less than six CSI processes, and the PUSCH is transmitted in a special subframe, the value of X may be $Y_6$. That is, in a case that $I_{MCS} = 29$, the "CSI request" field is three bits, the "CSI request" field is set to trigger a non-periodic CSI report for more than one and less than six CSI processes, $N_{PRB} \le Y_6$, and the PUSCH is transmitted in a special subframe, the terminal apparatus 1 may perform the processing A. $Y_6$ may be an integer larger than 20, or 40.

For example, in a case that $I_{MCS} = 29$, the "CSI request" field is three bits, and the "CSI request" field triggers a non-periodic CSI report for more than five CSI processes, the value of X may be infinite. That is, in a case that $I_{MCS} = 29$, the "CSI request" field is three bits, the "CSI request" field is set to trigger a non-periodic CSI report for more than one and less than six CSI processes, the terminal apparatus 1 may perform the processing A regardless of $N_{PRB}$ and whether a subframe in which the PUSCH is transmitted is an uplink subframe or a special subframe.

A second modification of the condition 1100 will be described below.

For example, in a case that $I_{MCS} = 29$, the "CSI request" field is one bit, the "CSI request" field is set to trigger a non-periodic CSI report, and the subframe number of a subframe in which the PDCCH including an uplink grant is detected is a first value, the value of X may be $Y_1$. That is, in a case that $I_{MCS} = 29$, the "CSI request" field is one bit, the "CSI request" field is set to trigger a non-periodic CSI report, $N_{PRB} \le Y_1$, and the subframe number of a subframe in which the PDCCH including an uplink grant is detected is the first value, the terminal apparatus 1 may perform the

processing A. $Y_1$ may be 4.

For example, in a case that $I_{MCS}$ = 29, the "CSI request" field is one bit, the "CSI request" field is set to trigger a non-periodic CSI report, and the subframe number of a subframe in which the PDCCH including an uplink grant is detected is a second value, the value of X may be $Y_2$. That is, in a case that $I_{MCS}$ = 29, the "CSI request" field is one bit, the "CSI request" field is set to trigger a non-periodic CSI report, $N_{PRB} \leq Y_2$, and the subframe number of a subframe in which the PDCCH including an uplink grant is detected is the second value, the terminal apparatus 1 may perform the processing A. $Y_2$ may be an integer larger than 4, or 8.

For example, in a case that $I_{MCS}$ = 29, the "CSI request" field is three bits, the "CSI request" field triggers a non-periodic CSI report for one CSI process, and the subframe number of a subframe in which the PDCCH including an uplink grant is detected is a first value, the value of X may be $Y_3$. That is, in a case that $I_{MCS}$ = 29, the "CSI request" field is three bits, the "CSI request" field is set to trigger a non-periodic CSI report for one CSI process, $N_{PRB} \leq Y_3$, and the subframe number of a subframe in which the PDCCH including an uplink grant is detected is the first value, the terminal apparatus 1 may perform the processing A. $Y_3$ may be 4.

For example, in a case that $I_{MCS}$ = 29, the "CSI request" field is three bits, the "CSI request" field triggers a non-periodic CSI report for one CSI process, and the subframe number of a subframe in which the PDCCH including an uplink grant is detected is a second value, the value of X may be $Y_4$. That is, in a case that $I_{MCS}$ = 29, the "CSI request" field is three bits, the "CSI request" field is set to trigger a non-periodic CSI report for one CSI process, $N_{PRB} \leq Y_4$, and the subframe number of a subframe in which the PDCCH including an uplink grant is detected is the second value, the terminal apparatus 1 may perform the processing A. $Y_4$ may be an integer larger than 4, or 8.

For example, in a case that $I_{MCS}$ = 29, the "CSI request" field is three bits, the "CSI request" field triggers a non-periodic CSI report for more than one and less than six CSI processes, and the subframe number of a subframe in which the PDCCH including an uplink grant is detected is a first value, the value of X may be $Y_5$. That is, in a case that $I_{MCS}$ = 29, the "CSI request" field is three bits, the "CSI request" field is set to trigger a non-periodic CSI report for more than one and less than six CSI processes, $N_{PRB} \leq Y_5$, and the subframe number of a subframe in which the PDCCH including an uplink grant is detected is the first value, the terminal apparatus 1 may perform the processing A. $Y_5$ may be 20.

For example, in a case that $I_{MCS}$ = 29, the "CSI request" field is three bits, the "CSI request" field triggers a non-periodic CSI report for more than one and less than six CSI processes, and the subframe number of a subframe in which the PDCCH including an uplink grant is detected is a first value, the value of X may be $Y_6$. That is, in a case that $I_{MCS}$ = 29, the "CSI request" field is three bits, the "CSI request" field is set to trigger a non-periodic CSI report for more than one and less than six CSI processes, $N_{PRB} \leq Y_6$, and the subframe number of a subframe in which the PDCCH including an uplink grant is detected is the first value, the terminal apparatus 1 may perform the processing A. $Y_6$ may be an integer larger than 20, or 40.

For example, in a case that $I_{MCS}$ = 29, the "CSI request" field is three bits, and the "CSI request" field triggers a non-periodic CSI report for more than five CSI processes, the value of X may be infinite. That is, in a case that $I_{MCS}$ = 29, the "CSI request" field is three bits, the "CSI request" field is set to trigger a non-periodic CSI report for more than one and less than six CSI processes, the terminal apparatus 1 may perform the processing A regardless of $N_{PRB}$ and the subframe number of a subframe in which the PDCCH including an uplink grant is detected.

A third modification of the condition 1100 will be described below.

For example, in a case that $I_{MCS}$ = 29, the "CSI request" field is one bit, the "CSI request" field is set to trigger a non-periodic CSI report, and $N_{symb} > Z$, the value of X may be $Y_1$. That is, in a case that $I_{MCS}$ = 29, the "CSI request" field is one bit, the "CSI request" field is set to trigger a non-periodic CSI report, $N_{PRB} \leq Y_1$, and $N_{symb} > Z$, the terminal apparatus 1 may perform the processing A. $Y_1$ may be 4. Z is an integer, and may be a value that is predetermined in a specification or the like.

For example, in a case that $I_{MCS}$ = 29, the "CSI request" field is one bit, the "CSI request" field is set to trigger a non-periodic CSI report, and $N_{symb} \leq Z$, the value of X may be $Y_2$. That is, in a case that $I_{MCS}$ = 29, the "CSI request" field is one bit, the "CSI request" field is set to trigger a non-periodic CSI report, $N_{PRB} \leq Y_2$, and $N_{symb} \leq Z$, the terminal apparatus 1 may perform the processing A. $Y_2$ may be an integer larger than 4, or 8.

For example, in a case that $I_{MCS}$ = 29, the "CSI request" field is three bits, the "CSI request" field triggers a non-periodic CSI report for one CSI process, and $N_{symb} > Z$, the value of X may be $Y_3$. That is, in a case that $I_{MCS}$ = 29, the "CSI request" field is three bits, the "CSI request" field is set to trigger a non-periodic CSI report for one CSI process, $N_{PRB} \leq Y_3$, and $N_{symb} > Z$, the terminal apparatus 1 may perform the processing A. $Y_3$ may be 4.

For example, in a case that $I_{MCS}$ = 29, the "CSI request" field is three bits, the "CSI request" field triggers a non-periodic CSI report for one CSI process, and $N_{symb} \leq Z$, the value of X may be $Y_4$. That is, in a case that $I_{MCS}$ = 29, the "CSI request" field is three bits, the "CSI request" field is set to trigger a non-periodic CSI report for one CSI process, $N_{PRB} \leq Y_4$, and $N_{symb} \leq Z$, the terminal apparatus 1 may perform the processing A. $Y_4$ may be an integer larger than 4, or 8.

For example, in a case that $I_{MCS}$ = 29, the "CSI request" field is three bits, the "CSI request" field triggers a non-periodic CSI report for more than one and less than six CSI processes, and $N_{symb} > Z$, the value of X may be $Y_5$. That is, in a case that $I_{MCS}$ = 29, the "CSI request" field is three bits, the "CSI request" field is set to trigger a non-periodic CSI report for more than one and less than six CSI processes, $N_{PRB} \leq Y_5$, and $N_{symb} > Z$, the terminal apparatus 1 may perform the processing A. $Y_5$ may be 20.

For example, in a case that $I_{MCS} = 29$, the "CSI request" field is three bits, the "CSI request" field triggers a non-periodic CSI report for more than one and less than six CSI processes, and $N_{symb} \leq Z$, the value of X may be $Y_6$. That is, in a case that $I_{MCS} = 29$, the "CSI request" field is three bits, the "CSI request" field is set to trigger a non-periodic CSI report for more than one and less than six CSI processes, $N_{PRB} \leq Y_6$, and $N_{symb} \leq Z$, the terminal apparatus 1 may perform the processing A. $Y_6$ may be an integer larger than 20, or 40.

For example, in a case that $I_{MCS} = 29$, the "CSI request" field is three bits, and the "CSI request" field triggers a non-periodic CSI report for more than five CSI processes, the value of X may be infinite. That is, in a case that $I_{MCS} = 29$, the "CSI request" field is three bits, the "CSI request" field is set to trigger a non-periodic CSI report for more than one and less than six CSI processes, the terminal apparatus 1 may perform the processing A regardless of $N_{symb}$ and $N_{PRB}$.

A fourth modification of the condition 1100 will be described below.

Based on the condition 1100, the processing A may be performed in a case that a condition including at least $P \leq Q$ is satisfied, and the processing B may be performed in the other cases. The value of P may be based on at least some or all of the conditions A to G described above.

The value of P may be given based on Expression 3 or Expression 4 below. Whether the value of P is given based on Expression 3 or Expression 4 below may be based on some or all of the conditions A to G above.

$$[\text{Expression 3}]$$

$$P = N_{PRB}$$

$$[\text{Expression 4}]$$

$$P = \max\left[\text{floor}\left\{N_{PRB} \times \alpha\right\}, 1\right]$$

, where max[] is a function that returns a minimum value among multiple input values, floor{} is a value that returns a maximum integer that is smaller than an input value, $\alpha$ is a decimal smaller than 1, $\alpha$ may be a value predetermined in the specifications or the like, and $\alpha$ may be given based on at least the number of SC-FDMA symbols to be transmitted through the PUSCH in one subframe ($N_{symb}$).

In a case that a subframe in which the PUSCH is transmitted is an uplink subframe, the value of P may be given based on Expression 3. In a case that a subframe in which the PUSCH is transmitted is a special subframe, the value of P may be given based on Expression 4.

In a case that the subframe number of a subframe in which the PDCCH including an uplink grant is detected is a first value, the value of P may be given based on Expression 3. In a case that the subframe number of a subframe in which the PDCCH including an uplink grant is detected is a second value, the value of P may be given based on Expression 4.

In a case that $N_{symb} > Z$, the value of P may be given based on Expression 3. In a case that $N_{symb} \leq Z$, the value of P may be given based on Expression 4.

For example, in a case that $I_{MCS} = 29$, the "CSI request" field is one bit, and the "CSI request" field is set to trigger a non-periodic CSI report, the value of Q may be 4. That is, in a case that $I_{MCS} = 29$, the "CSI request" field is one bit, the "CSI request" field is set to trigger a non-periodic CSI report, and $P \leq 4$, the terminal apparatus 1 may perform the processing A.

For example, in a case that $I_{MCS} = 29$, the "CSI request" field is three bits, and the "CSI request" field triggers a non-periodic CSI report for one CSI process, the value of Q may be 4. That is, in a case that $I_{MCS} = 29$, the "CSI request" field is three bits, the "CSI request" field is set to trigger a non-periodic CSI report for one CSI process, and $P \leq 4$, the terminal apparatus 1 may perform the processing A.

For example, in a case that $I_{MCS} = 29$, the "CSI request" field is three bits, the "CSI request" field triggers a non-periodic CSI report for more than one and less than six CSI processes, the value of Q may be 20. That is, in a case that $I_{MCS} = 29$, the "CSI request" field is three bits, the "CSI request" field is set to trigger a non-periodic CSI report for more than one and less than six CSI processes, and $P \leq 20$, the terminal apparatus 1 may perform the processing A.

For example, in a case that $I_{MCS} = 29$, the "CSI request" field is three bits, and the "CSI request" field triggers a non-periodic CSI report for more than five CSI processes, the value of Q may be infinite. That is, in a case that $I_{MCS}$

= 29, the "CSI request" field is three bits, the "CSI request" field is set to trigger a non-periodic CSI report for more than one and less than six CSI processes, the terminal apparatus 1 may perform the processing A regardless of P.

Configurations of devices according to the present embodiment will be described below.

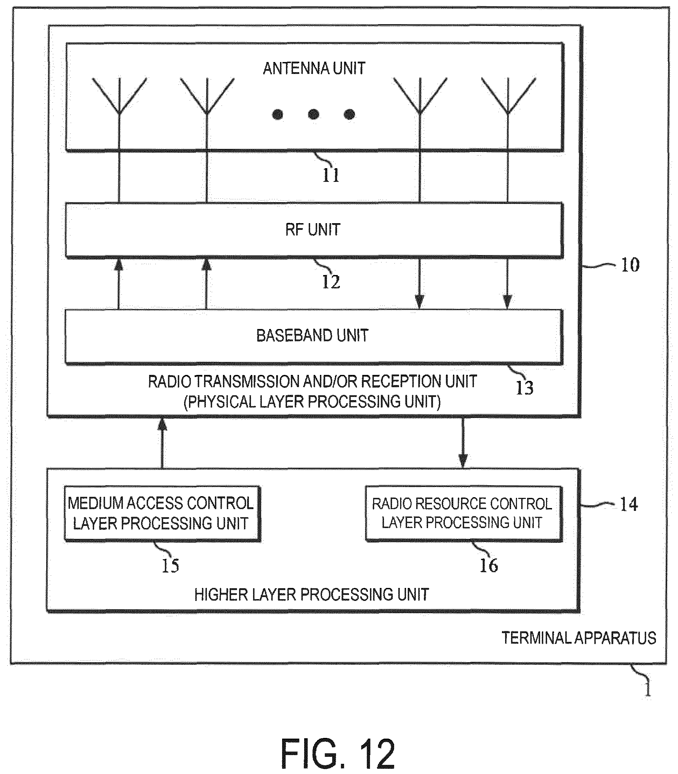

FIG. 12 is a schematic block diagram illustrating a configuration of the terminal apparatus 1 according to the present embodiment. As illustrated, the terminal apparatus 1 is configured to include a radio transmission and/or reception unit 10 and a higher layer processing unit 14. The radio transmission and/or reception unit 10 is configured to include an antenna unit 11, a Radio Frequency (RF) unit 12, and a baseband unit 13. The higher layer processing unit 14 is configured to include a medium access control layer processing unit 15 and a radio resource control layer processing unit 16. The radio transmission and/or reception unit 10 is also referred to as a transmitter, a receiver or a physical layer processing unit.

The higher layer processing unit 14 outputs uplink data (transport block) generated by a user operation and the like, to the radio transmission and/or reception unit 10. The higher layer processing unit 14 performs processing of the Medium Access Control (MAC) layer, the Packet Data Convergence Protocol (PDCP) layer, the Radio Link Control (RLC) layer, and the Radio Resource Control (RRC) layer.

The medium access control layer processing unit 15 included in the higher layer processing unit 14 performs processing of the Medium Access Control layer. The medium access control layer processing unit 15 controls transmission of a scheduling request, based on various types of configuration information/parameters managed by the radio resource control layer processing unit 16.

The radio resource control layer processing unit 16 included in the higher layer processing unit 14 performs processing of the Radio Resource Control layer. The radio resource control layer processing unit 16 manages the various types of configuration information/parameters of the terminal apparatus 1. The radio resource control layer processing unit 16 sets the various types of configuration information/parameters, based on higher layer signaling received from the base station apparatus 3. That is, the radio resource control layer processing unit 16 sets the various types of configuration information/parameters, based on information indicating the various types of configuration information/parameters received from the base station apparatus 3.

The radio transmission and/or reception unit 10 performs processing of the physical layer, such as modulation, demodulation, coding, and decoding. The radio transmission and/or reception unit 10 demultiplexes, demodulates, and decodes a signal received from the base station apparatus 3, and outputs the information resulting from the decoding to the higher layer processing unit 14. The radio transmission and/or reception unit 10 modulates and codes data to generate a transmit signal, and transmits the transmit signal to the base station apparatus 3.

The RF unit 12 converts (down-converts) a signal received via the antenna unit 11 into a baseband signal by orthogonal demodulation and removes unnecessary frequency components. The RF unit 12 outputs the processed analog signal to the baseband unit.

The baseband unit 13 converts the analog signal input from the RF unit 12 into a digital signal. The baseband unit 13 removes a portion corresponding to a Cyclic Prefix (CP) from the digital signal resulting from the conversion, performs Fast Fourier Transform (FFT) of the signal from which the CP has been removed, and extracts a signal in the frequency domain.

The baseband unit 13 performs Inverse Fast Fourier Transform (IFFT) on data, generates an SC-FDMA symbol, attaches a CP to the generated SC-FDMA symbol, generates a baseband digital signal, and converts the baseband digital signal into an analog signal. The baseband unit 13 outputs the analog signal resulting from the conversion, to the RF unit 12.

The RF unit 12 removes unnecessary frequency components from the analog signal input from the baseband unit 13 by using a low-pass filter, up-converts the analog signal into a signal of a carrier frequency, and transmits the final result via the antenna unit 11. Furthermore, the RF unit 12 amplifies power. Furthermore, the RF unit 12 may have a function of controlling transmit power. The RF unit 12 is also referred to as a transmit power control unit.

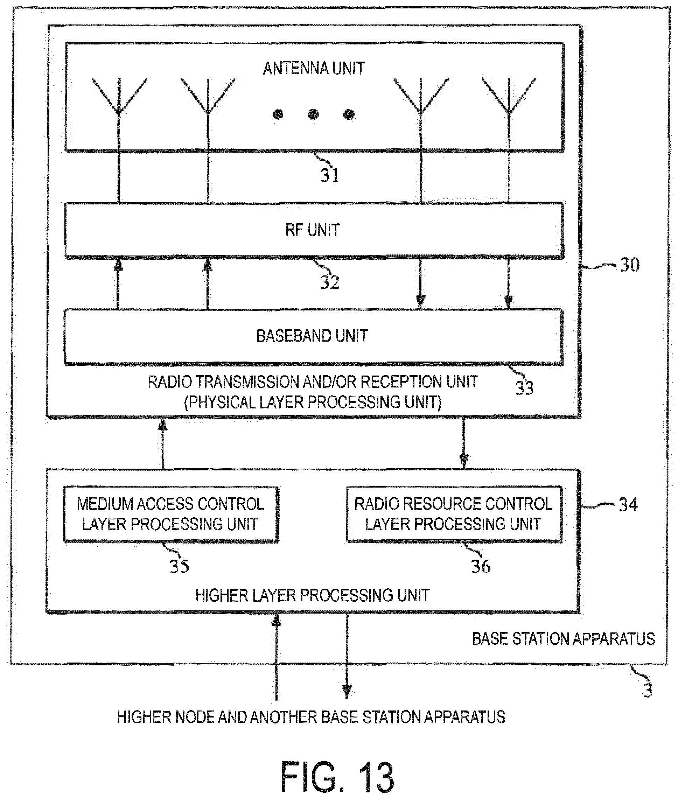

FIG. 13 is a schematic block diagram illustrating a configuration of the base station apparatus 3 according to the present embodiment. As illustrated, the base station apparatus 3 is configured to include a radio transmission and/or reception unit 30 and a higher layer processing unit 34. The radio transmission and/or reception unit 30 is configured to include an antenna unit 31, an RF unit 32, and a baseband unit 33. The higher layer processing unit 34 is configured to include a medium access control layer processing unit 35 and a radio resource control layer processing unit 36. The radio transmission and/or reception unit 30 is also referred to as a transmission unit, a reception unit or a physical layer processing unit.

The higher layer processing unit 34 performs processing of the Medium Access Control (MAC) layer, the Packet Data Convergence Protocol (PDCP) layer, the Radio Link Control (RLC) layer, and the Radio Resource Control (RRC) layer.

The medium access control layer processing unit 35 included in the higher layer processing unit 34 performs processing of the Medium Access Control layer. The medium access control layer processing unit 35 performs processing associated with a scheduling request, based on various types of configuration information/parameters managed by the radio resource control layer processing unit 36.

The radio resource control layer processing unit 36 included in the higher layer processing unit 34 performs processing of the Radio Resource Control layer. The radio resource control layer processing unit 36 generates, or acquires from a higher node, downlink data (transport block) allocated on a physical downlink shared channel, system information, an RRC message, a MAC Control Element (CE), and the like, and outputs the generated or acquired data to the radio transmission and/or reception unit 30. Furthermore, the radio resource control layer processing unit 36 manages various types of configuration information/parameters for each of the terminal apparatuses 1. The radio resource control layer processing unit 36 may set various types of configuration information/parameters for each of the terminal apparatuses 1 via the higher layer signaling. In other words, the radio resource control layer processing unit 36 transmits/broadcasts information indicating various types of configuration information/parameters.

The functionality of the radio transmission and/or reception unit 30 is similar to that of the radio transmission and/or reception unit 10, and hence description thereof is omitted.

Each of the units having the reference signs 10 to 16 included in the terminal apparatus 1 may be configured as a circuit. Each of the units having the reference signs 30 to 36 included in the base station apparatus 3 may be configured as a circuit.

Various aspects of the terminal apparatus 1 and the base station apparatus 3 according to the present embodiment will be described below.

(1) A first aspect of the present embodiment is the terminal apparatus 1 including the receiver 10 configured to receive a Physical Downlink Control Channel (PDCCH) including a Downlink Control Information (DCI) format, and the transmitter 10 configured to perform a transmission using a Physical Uplink Shared Channel (PUSCH) based on detection of the PDCCH, wherein the transmitter 10 determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(2) A second aspect of the present embodiment is the base station apparatus 3 including the transmitter 30 configured to perform a transmission of a Physical Downlink Control Channel (PDCCH) including a Downlink Control Information (DCI) format, and the receiver 30 configured to perform reception using a Physical Uplink Shared Channel (PUSCH) corresponding to the transmission of the PDCCH, wherein the receiver 30 determines to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(3) A third aspect of the present embodiment is a communication method used for the terminal apparatus 1, the communication method including the steps of receiving a Physical Downlink Control Channel (PDCCH) including a Downlink Control Information (DCI) format, performing a transmission using a Physical Uplink Shared Channel (PUSCH) based on detection of the PDCCH, and determining to transmit, based on at least (i) whether a sub frame in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(4) A fourth aspect of the present embodiment is a communication method used for the base station apparatus 3, the communication method including the steps of performing a transmission of a Physical Downlink Control Channel (PDCCH) including a Downlink Control Information (DCI) format, performing reception using a Physical Uplink Shared Channel (PUSCH) corresponding to the transmission of the PDCCH, and determining to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(5) A fifth aspect of the present embodiment is an integrated circuit mounted on the terminal apparatus 1, the integrated circuit including the reception circuit 10 configured to receive a Physical Downlink Control Channel (PDCCH) including a Downlink Control Information (DCI) format, and the transmission circuit 10 configured to perform a transmission using a Physical Uplink Shared Channel (PUSCH) based on detection of the PDCCH, wherein the transmission circuit 10 determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

(6) A sixth aspect of the present embodiment is an integrated circuit mounted on the base station apparatus 3, the integrated circuit including the transmission circuit 30 configured to perform a transmission of a Physical Downlink Control Channel (PDCCH) including a Downlink Control Information (DCI) format, and the reception circuit 30 configured to perform reception using a Physical Uplink Shared Channel (PUSCH) corresponding to the transmission of the PDCCH, wherein the reception circuit 30 determines to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

Consequently, the terminal apparatus and the base station apparatus can efficiently communicate with each other by using an uplink signal.

A program running on each of the base station apparatus 3 and the terminal apparatus 1 according to the present invention may serve as a program that controls a Central Processing Unit (CPU) and the like (a program for causing a computer to operate) in such a manner as to enable the functionalities according to the above-described embodiment of the present invention. The information handled in these devices is temporarily stored in a Random Access Memory (RAM) while being processed. Thereafter, the information is stored in various types of Read Only Memory (ROM) such as a flash ROM and a Hard Disk Drive (HDD), and when necessary, is read by the CPU to be modified or rewritten.

Moreover, the terminal apparatus 1 and the base station apparatus 3 according to the above-described embodiment may be partially achieved by a computer. In this case, this configuration may be realized by recording a program for realizing such control functions on a computer-readable recording medium and causing a computer system to read the program recorded on the recording medium for execution.

Note that it is assumed that the "computer system" refers to a computer system built into the terminal apparatus 1 or the base station apparatus 3, and the computer system includes an OS and hardware components such as a peripheral device. Furthermore, the "computer-readable recording medium" refers to a portable medium such as a flexible disk, a magneto-optical disk, a ROM, and a CD-ROM, and a storage device such as a hard disk built into the computer system.

Moreover, the "computer-readable recording medium" may include a medium that dynamically retains the program for a short period of time, such as a communication line that is used to transmit the program over a network such as the Internet or over a communication line such as a telephone line, and a medium that retains, in that case, the program for a fixed period of time, such as a volatile memory within the computer system which functions as a server or a client. Furthermore, the program may be configured to realize some of the functions described above, and also may be configured to be capable of realizing the functions described above in combination with a program already recorded in the computer system.

Furthermore, the base station apparatus 3 according to the above-described embodiment is achieved as an aggregation (a device group) constituted of multiple devices. Each of the devices constituting such a device group may include some or all portions of each function or each functional block of the base station apparatus 3 according to the above-described embodiment. The device group may include each general function or each functional block of the base station apparatus 3. Furthermore, the terminal apparatus 1 according to the above-described embodiment can also communicate with the base station apparatus as the aggregation.

Furthermore, the base station apparatus 3 according to the above-described embodiment may serve as an Evolved Universal Terrestrial Radio Access Network (EUTRAN). Furthermore, the base station apparatus 3 according to the above-described embodiment may have some or all portions of the functions of a node higher than an eNodeB.

Furthermore, some or all portions of each of the terminal apparatus 1 and the base station apparatus 3 according to the above-described embodiment may be achieved as an LSI which is a typical integrated circuit or may be achieved as a chip set. The functional blocks of each of the terminal apparatus 1 and the base station apparatus 3 may be individually achieved as a chip, or some or all of the functional blocks may be integrated into a chip. Furthermore, a circuit integration technique is not limited to the LSI, and may be realized with a dedicated circuit or a general-purpose processor. Furthermore, in a case where with advances in semiconductor technology, a circuit integration technology with which an LSI is replaced appears, it is also possible to use an integrated circuit based on the technology.

Furthermore, according to the above-described embodiment, the terminal apparatus is described as one example of a communication device, but the present invention is not limited to this, and can be applied to a fixed-type or a stationary-type electronic apparatus installed indoors or outdoors, for example, a terminal apparatus or a communication device, such as an audio-video (AV) apparatus, a kitchen apparatus, a cleaning or washing machine, an air-conditioning apparatus, office equipment, a vending machine, an automobile, a bicycle, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

Cross-Reference of Related Application

The present application claims priority of JP 2016-077078, filed on April 7, 2016, and all the contents thereof are included herein by the reference.

Reference Signs List

    1 (1A, IB, 1C) Terminal apparatus
    3 Base station apparatus
    10 Radio transmission and/or reception unit
    11 Antenna unit
    12 RF unit
    13 Baseband unit
    14 Higher layer processing unit
    15 Medium access control layer processing unit
    16 Radio resource control layer processing unit
    30 Radio transmission and/or reception unit
    31 Antenna unit
    32 RF unit
    33 Baseband unit
    34 Higher layer processing unit
    35 Medium access control layer processing unit
    36 Radio resource control layer processing unit

**Claims**

1.   A terminal apparatus comprising:

    a receiver configured to receive a Physical Downlink Control Channel (PDCCH) including a Downlink Control Information (DCI) format; and
    a transmitter configured to perform a transmission using a Physical Uplink Shared Channel (PUSCH) based on detection of the PDCCH, wherein
    the transmitter determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

2.   The terminal apparatus according to claim 1, wherein
    the uplink control information includes channel state information.

3.   A base station apparatus comprising:

    a transmitter configured to perform a transmission of a Physical Downlink Control Channel (PDCCH) including a Downlink Control Information (DCI) format; and
    a receiver configured to perform reception using a Physical Uplink Shared Channel (PUSCH) corresponding to the transmission of the PDCCH, wherein

the receiver determines to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

4. The base station apparatus according to claim 3, wherein
   the uplink control information includes channel state information.

5. A communication method used for a terminal apparatus, the communication method comprising the steps of:

   receiving a Physical Downlink Control Channel (PDCCH) including a Downlink Control Information (DCI) format;
   performing a transmission using a Physical Uplink Shared Channel (PUSCH) based on detection of the PDCCH; and
   determining to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

6. The communication method according to claim 5, wherein
   the uplink control information includes channel state information.

7. A communication method used for a base station apparatus, the communication method comprising the steps of:

   performing a transmission of a Physical Downlink Control Channel (PDCCH) including a Downlink Control Information (DCI) format;
   performing reception using a Physical Uplink Shared Channel (PUSCH) corresponding to the transmission of the PDCCH; and
   determining to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

8. The communication method according to claim 7, wherein
   the uplink control information includes channel state information.

9. An integrated circuit mounted on a terminal apparatus, the integrated circuit comprising:

   a reception circuit configured to receive a Physical Downlink Control Channel (PDCCH) including a Downlink Control Information (DCI) format; and
   a transmission circuit configured to perform a transmission using a Physical Uplink Shared Channel (PUSCH) based on detection of the PDCCH, wherein
   the transmission circuit determines to transmit, based on at least (i) whether a subframe in which the transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

10. The integrated circuit according to claim 9, wherein
    the uplink control information includes channel state information.

11. An integrated circuit mounted on a base station apparatus, the integrated circuit comprising:

    a transmission circuit configured to perform a transmission of a Physical Downlink Control Channel (PDCCH) including a Downlink Control Information (DCI) format; and
    a reception circuit configured to perform reception using a Physical Uplink Shared Channel (PUSCH) corresponding to the transmission of the PDCCH, wherein
the reception circuit determines to receive, based on at least (i) whether a subframe in which a transmission using the PUSCH is performed is an uplink subframe or a special subframe, (ii) a subframe number of a subframe in which the PDCCH including the DCI format is detected, or (iii) the number of Single Carrier-Frequency Division Multiple Access (SC-FDMA) symbols that transmit the PUSCH in one subframe, uplink control information by using the PUSCH that includes no transport block.

12. The integrated circuit according to claim 11, wherein
the uplink control information includes channel state information.

FIG. 1

FIG. 2

FIG. 3

| UPLINK CYCLIC PREFIX CONFIGURATION ($UL\text{-}CyclicPrefixLength$) | CYCLIC PREFIX LENGTH $N_{CP,l}$ | SC-FDMA SYMBOL LENGTH |
|---|---|---|
| NORMAL CYCLIC PREFIX | 160 for $l = 0$<br>144 for $l = 1,2,\cdots,6$ | $(160+2048)\cdot T_s$ for $l = 0$<br>$(144+2048)\cdot T_s$ for $l = 1,2,\cdots,6$ |

# FIG. 4

| UL/DL CONFIGURATION | DOWNLINK-TO-UPLINK SWITCH-POINT PERIODICITY | SUBFRAME NUMBER | | | | | | | | | |
|---|---|---|---|---|---|---|---|---|---|---|---|
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 5ms | D | S | U | U | U | D | S | U | U | D |

# FIG. 5

FIG. 6

FIG. 7

| SPECIAL SUBFRAME CONFIGURATION | DwPTS | UpPTS |
|---|---|---|
| 0 | $6592 \cdot T_s$ (3 symbol) | $(1+X) \cdot 2192 \cdot T_s$ (1+X symbol) |
| 1 | $19760 \cdot T_s$ (9 symbol) | |
| 2 | $21952 \cdot T_s$ (10 symbol) | |
| 3 | $24144 \cdot T_s$ (11 symbol) | |
| 4 | $26336 \cdot T_s$ (12 symbol) | |
| 5 | $6592 \cdot T_s$ (3 symbol) | $(2+X) \cdot 2192 \cdot T_s$ (2+X symbol) |
| 6 | $19760 \cdot T_s$ (9 symbol) | |
| 7 | $21952 \cdot T_s$ (10 symbol) | |
| 8 | $24144 \cdot T_s$ (11 symbol) | |
| 9 | $13168 \cdot T_s$ (6 symbol) | |

FIG. 8

| UL/DL CONFIGURATION | SUBFRAME NUMBER | | | | | | | | | |
|---|---|---|---|---|---|---|---|---|---|---|
| | 0 | 1 | 2 | 3 | 4 | 5 | 6 | 7 | 8 | 9 |
| 0 | 4 | 6 | | | | 4 | 6 | | | |
| 1 | 6 | 6 | | | 4 | 6 | 6 | | | 4 |
| 2 | | 5 | | 4 | | | 5 | | 4 | |
| 3 | 4 | | | | | | | 4 | 4 | 4 |
| 4 | | | | | | | | 4 | 4 | 4 |
| 5 | | | | | | | | 4 | 4 | |
| 6 | 7 | 7 | | | | 7 | 7 | | | 5 |

FIG. 9

| UL/DL CONFIGURATION | SUBFRAME NUMBER | | | | | | | | | |
|---|---|---|---|---|---|---|---|---|---|---|
| | 0 | 1 | 2 | 3 | 4 | 5 | 6 | 7 | 8 | 9 |
| 2 | | *5* | | 4 | | | *5* | | 4 | |
| | D | *S* | U | D | D | D | *S* | U | D | D |

⬇ PDCCH 1000 ➡ ⬆ PUSCH 1001

| UL/DL CONFIGURATION | SUBFRAME NUMBER | | | | | | | | | |
|---|---|---|---|---|---|---|---|---|---|---|
| | 0 | 1 | 2 | 3 | 4 | 5 | 6 | 7 | 8 | 9 |
| 2 | | *5* | | 4 | | | *5* | | 4 | |
| | D | *S* | U | D | D | D | *S* | U | D | D |

⬇ PDCCH 1002 ➡ ⬆ PUSCH 1003

# FIG. 10

START

CONDITION 1100

PROCESSING 1102

PROCESSING 1104

END

FIG. 11

ANTENNA UNIT

• • •

11

RF UNIT

12

10

BASEBAND UNIT

RADIO TRANSMISSION AND/OR RECEPTION UNIT
(PHYSICAL LAYER PROCESSING UNIT)
13

MEDIUM ACCESS CONTROL
LAYER PROCESSING UNIT

RADIO RESOURCE CONTROL
LAYER PROCESSING UNIT

14

15

16

HIGHER LAYER PROCESSING UNIT

TERMINAL APPARATUS

1

FIG. 12

ANTENNA UNIT

• • •

31

RF UNIT

32

BASEBAND UNIT

RADIO TRANSMISSION AND/OR RECEPTION UNIT
(PHYSICAL LAYER PROCESSING UNIT)    33

30

MEDIUM ACCESS CONTROL
LAYER PROCESSING UNIT

RADIO RESOURCE CONTROL
LAYER PROCESSING UNIT    34

35

36

HIGHER LAYER PROCESSING UNIT

BASE STATION APPARATUS

3

HIGHER NODE AND ANOTHER BASE STATION APPARATUS

# FIG. 13

## INTERNATIONAL SEARCH REPORT

| International application No. |
|---|
| PCT/JP2017/004677 |

### A. CLASSIFICATION OF SUBJECT MATTER
*H04W72/04(2009.01)i*

According to International Patent Classification (IPC) or to both national classification and IPC

### B. FIELDS SEARCHED

Minimum documentation searched (classification system followed by classification symbols)
*H04B7/24-7/26, H04W4/00-99/00*

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | Ericsson, Aperiodic CSI reporting without UL-SCH[online], 3GPP TSG-RAN WG1#84 R1-161118, Internet <URL:http://www.3gpp.org/ftp/tsg_ran/WG1_RL1/TSGR1_84/Docs/R1-161118.zip>, 2016.02.11, entire text | 1-12 |
| Y | JP 2015-133621 A  (NTT Docomo Inc.), 23 July 2015 (23.07.2015), paragraphs [0030] to [0043] & US 2016/0338049 A1 paragraphs [0049] to [0062] & WO 2015/108008 A1    & CN 105900479 A | 1-12 |

☒ Further documents are listed in the continuation of Box C.          ☐ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered    to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 07 April 2017 (07.04.17) | 25 April 2017 (25.04.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2017/004677

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2015/107851 A1 (Sharp Corp.),<br>23 July 2015 (23.07.2015),<br>paragraphs [0024] to [0076], [0190] to [0203]<br>& US 2016/0338048 A1<br>paragraphs [0047] to [0119], [0236] to [0251]<br>& EP 3096577 A1        & CN 105850206 A | 1-12 |
| A | JP 2015-165605 A (NTT Docomo Inc.),<br>17 September 2015 (17.09.2015),<br>entire text<br>& WO 2015/079926 A1      & EP 3076734 A1 | 1-12 |
| A | Ericsson, CMCC, New Work Item on Uplink<br>Capacity Enhancements for LTE[online], 3GPP<br>TSG-RAN#71 RP-160664, Internet <URL:http://www.<br>3gpp.org/ftp/tsg_ran/TSG_RAN/TSGR_71/Docs/RP-<br>160664.zip>, 2016.03.10, entire text | 1-12 |
| A | LG Electronics, Proposal for aperiodic CSI<br>only PUSCH without UL-SCH[online], 3GPP TSG-RAN<br>WG1#84 R1-160600, Internet <URL:http://www.3gpp.<br>org/ftp/tsg_ran/WG1_RL1/TSGR1_84/Docs/R1-160600.<br>zip>, 2016.02.06, entire text | 1-12 |
| A | NEC, On the need to extend coverage enhancement<br>for Configurations #2, #3, #4, #5[online], 3GPP<br>TSG-RAN WG1#75 R1-135261, Internet <URL:http://<br>www.3gpp.org/ftp/tsg_ran/WG1_RL1/TSGR1_75/Docs/<br>R1-135261.zip>, 2013.11.01, entire text | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016077078 A

**Non-patent literature cited in the description**

- Motivation for New Work Item Proposal: UL transmission Enhancement for LTE. *R1-160226, CMCC, 3GPP TSG RAN Meeting #71,* 07 March 2016
- *3GPP TS 36.211 V12.5.0 (2015-03),* 26 March 2015
- *3GPP TS 36.213 V12.5.0 (2015-03),* 26 March 2015